# EUROPEAN PATENT APPLICATION

(11) **EP 1 702 966 A1**
(43) Date of publication of application: **20.09.2006**
(21) Application number: 04793316.3
(22) Date of filing: 27.10.2004
(51) Int. Cl.: C09J 7/02, B41M 5/00, B31D 1/02, B41J 2/01

(54) **SELF-ADHESIVE LABEL FOR LINERLESS INKJET RECORDING**

(30) Priority: 29.10.2003 JP 2003369033
(71) Applicant: Oji Tac Co., Ltd., Chuo-ku, Tokyo 104-0061 (JP); OJI PAPER CO., LTD., Tokyo 104-0061 (JP)
(72) Inventor: MATSUBAYASHI, Satoru, Tochigi 321-0951 (JP); FUKIMBARA, Masahiro, Tochigi 321-0984 (JP)
(74) Representative: Poulin, Gérard
(86) International application number: PCT/JP2004/016283
(87) International publication number: WO 2005/040297

(57) **Abstract**

A linerless ink-jet recording adhesive label is provided which has a suitability for ink-jet recording without requiring a release paper and is also excellent in adhesive and peeling properties without causing the increase of peel force even over time. The linerless ink-jet recording adhesive label containing an ink-jet recording sheet as a substrate, a release agent layer provided on the front surface of the substrate, and an adhesive layer provided on the rear surface of the substrate is **characterized in that** a release agent composing the release agent layer mainly contains at least one polymer selected from the group consisting of a polyvinyl alcohol containing a long-chain alkyl group, an amino-alkyd resin containing a long-chain alkyl group, and a polyethylenimine containing a long-chain alkyl group, and the adhesive layer is formed by an adhesive containing fine spheres.

## Description

### Technical Field

The present invention relates to a linerless ink-jet recording adhesive label which does not require a release paper.

The present invention claims priority on Japanese Patent Application No. 2003-369033, the content of which is incorporated herein by reference.

### Background Art

In recent years, since the use of personal computers and digital cameras has become widely spread, an adhesive label using a recording sheet capable of full-color printing as the substrate thereof has been widely used.

In particular, the use of an ink-jet recording adhesive label using an ink-jet recording sheet has been increasing, because the label enables easy printing and has great flexibility in small lot recording.

In this ink-jet recording system, since a head nozzle of a printer and a recording surface do not contact with each other, there is an advantage in which recording can be performed on a label adhered to an adherend having a rough surface or a curved surface.

The ink-jet recording adhesive label is generally composed of a substrate such as a high-quality paper or an ink-jet recording sheet having a support and an ink-jet recording layer formed on the support, and an adhesive layer and a release paper provided in this order on the rear surface of the substrate.

There is an environmental problem common to all adhesive labels having a release paper without being limited to the ink-jet recording adhesive labels, in which a lot of release papers are disposed of as refuse after adhering labels to the adherends thereof.

Because many of the release papers cannot be repulped using conventional equipment for recycling used paper, they are currently incinerated or landfilled. Moreover, because the paper thickness increases by corresponding amounts of the release paper used in the label, there is a problem in which the length of a rolled adhesive label which can be built in a label-printer is limited, and so enlargement of the printer-size or frequent replacement of a roll of the adhesive label is required.

In order to solve the problem caused by using the release paper, a heat-sensitive recording adhesive label in which a release agent layer is provided on the surface of a heat-sensitive recording layer of a heat-sensitive recording sheet so as to eliminate the requirement of the release paper has been proposed (see, for example, Japanese Patent Application, Second Publication No. Hei 4-15110).

Also, the applicant has proposed a linerless ink-jet recording adhesive label in which the release paper is not required by using a particular release agent and which has a suitability for ink-jet recording (see, for example, Japanese Patent Application, First publication No. 2001-139900).

In Japanese Patent Application, Second Publication No. Hei 4-15110, although the release agent layer is provided on the surface of the heat-sensitive recording layer, it is difficult to apply this to ink-jet recording.

In general, a compound having a basic skeleton of polydimethylsiloxane containing many nonpolar methyl groups is used as a release agent so as to enable the adhesive layer to be easily exfoliated. Accordingly, when a release agent layer is conventionally formed on the surface of the ink-jet recording layer, ink droplets spluttered by an ink-jet printer are repelled, and so recording cannot be performed.

In the case of applying a small quantity of the release agent, the suitability for ink-jet recording can be maintained, but the peeling properties significantly decrease.

Although the ink-jet recording label disclosed in Japanese Patent Application, First Publication No. 2001-139900 has no particular problem when conventionally used, the force required for peeling tends to slightly increase when a long time has passed after the end of the production. When the force required for peeling increases, defects in operating a printer-labeler or deterioration of the suitability for ink-jet recording may be caused. In recent years, the case in which an ink-jet recording label is used after being stored for a long time has been increasing in accordance with the broader use thereof. Accordingly, a linerless ink-jet recording label having an enhanced performance free from the increased force required for peeling even over time has been required.

### Disclosure of the Invention

The present invention has been achieved in consideration of the above-mentioned situation, and has as an object thereof to provide a linerless ink-jet recording adhesive label having a suitability for ink-jet recording despite the fact that a release paper is not required in consideration of the environment, while being excellent in adhesive and peeling properties free from the increased force required for peeling over time.

In order to achieve the above-mentioned object, the inventors of the present invention focused their attention on using, as a material that does not deteriorate the suitability for ink-jet recording, but exhibits peeling properties free from the increase of the force required for peeling even over time, a release agent containing as its main component at least one polymer selected from the group consisting of a polyvinyl alcohol containing a long-chain alkyl group, an amino-alkyd resin containing a long-chain alkyl group, and a polyethylenimine containing a long-chain alkyl group, instead of a silicone-based release agent conventionally and widely used as a release agent.

As a result of accumulated investigation, the inventors of the present invention found that the above-mentioned problems can be solved by using an adhesive containing fine spheres for an adhesive layer and combining this adhesive with the release agent, and completed the present invention.

That is, the present invention relates to the following linerless ink-jet recording adhesive label.
(1) A linerless ink-jet recording adhesive label comprising an ink-jet recording sheet as a substrate, a release agent layer provided on the front surface of the substrate, and an adhesive layer provided on the rear surface of the substrate, characterized in that a release agent composing the release agent layer mainly comprises at least one polymer selected from the group consisting of a polyvinyl alcohol containing a long-chain alkyl group, an amino-alkyd resin containing a long-chain alkyl group, and a polyethylenimine containing a long-chain alkyl group, and the adhesive layer is formed by an adhesive containing fine spheres.
(2) A linerless ink-jet recording adhesive label according to (1), characterized in that a solid content of the fine spheres is 20 to 80% by mass of the adhesive containing fine spheres.
(3) A sticking and printing method characterized in that the linerless ink-jet recording adhesive label according to claim 1 or 2 is formed into a wound body in a roll shape by adhering the adhesive layer to the release agent layer present at the rear of the adhesive layer, the wound body is conveyed while being rewound by using a conveyer and is stuck on a material to be stuck, and printing is performed on the surface of the release agent layer using an ink-jet ink.

### Best Mode for Carrying Out the Invention

In the present invention, examples of an ink-jet recording sheet used as the substrate include sheets conventionally used as ink-jet recording sheets regardless of the kinds of sheets and existence of an ink-jet recording layer.

For example, a high-quality paper (acid paper, neutralized paper), medium-quality paper, coated paper, resin-laminated paper, and the like can be used alone as the substrate. Also, the substrate may be formed by using one of these as a support, and providing an ink-jet recording layer that is mat, lustrous, extremely lustrous, or the like on one surface of the support.

In order to increase the strength of the surface of the substrate on which an adhesive is applied, to improve adhesion properties between the substrate and an adhesive layer, or to prevent the adhesive from infiltrating into the substrate and causing deterioration of adhesive function, a barrier layer may be provided. The barrier layer may be a layer in which a water-soluble polymer such as polyvinyl alcohol, starch, or the like, and/or a pigment are(is) mainly contained, or in which a resin mainly containing polyester, polyurethane, acryl polyol, polyethylenimine, polyacrylamine, polyacrylic acid ester, modified polyolefin, oxazoline, ethylene-vinyl acetate copolymer, vinyl chloride-vinyl acetate copolymer, or the like is used alone or in combination therewith.

Also, a single layer or plural layers in which a reactive curing agent such as isocyanate compounds, epoxy compounds, or the like is added may be provided, as needed.

In the present invention, a release agent composing a release agent layer provided on the front side of the substrate is not particularly limited provided that the release agent layer mainly contains at lease one polymer selected from the group consisting of a polyvinyl alcohol containing a long-chain alkyl group, an amino-alkyd resin containing a long-chain alkyl group, and a polyethylenimine containing a long-chain alkyl group, among which, one mainly containing a polyvinyl alcohol containing a long-chain alkyl group is preferable. When the substrate has an ink-jet recording layer, the front side of the substrate means the ink-jet recording layer side. When the substrate does not have an ink-jet recording layer, the front side means the side on which the release agent layer is provided.

Although a silicone-based release agent generally used exhibits high peeling properties, it repels ink droplets because of its inherent water repellancy, and so scarcely has the ink-absorbability and ink-fixable property. Accordingly, a non-silicone-based release agent which does not deteriorate suitability for ink-jet recording is used in the present invention.

However, since the non-silicone-based release agent is generally poor in peeling properties, it is required that nonpolar groups are aligned on the surface of a coated layer formed by coating the non-silicone-based release agent so as to exhibit the peeling properties from the adhesive.

The polyvinyl alcohol containing a long-chain alkyl group has a polyvinyl alcohol which is rich in hydrophilic property as its main chain and a long-chain alkyl group which is rich in peeling property as its side chain. Accordingly, it is possible to demonstrate both peeling property and suitability for ink-jet recording by introducing a long-chain alkyl group as the side chain into a polyvinyl alcohol.

In order to exhibit desired characteristics, it is more preferable that the long-chain alkyl group of the polyvinyl alcohol containing the long-chain alkyl group has 10 to 30 carbon atoms. When the number of the carbon atoms is no less than 10, good peeling properties are demonstrated, while when the number is no more than 30, the suitability for ink-jet recording is not deteriorated.

The amount of the release agent in the release agent layer is preferably within a range from 0.1 to 5.0 g/m², more preferably within a range from 0.5 g/m² to 3.0 g/m², and even more preferably within a range from 0.7 to 1.5 g/m². When the amount of the release agent is no less than 0.1 g/m², good peeling properties can be exhibited, while when the amount is no more than 5.0 g/m², good suitability for ink-jet recording can be maintained, and so problems such as ink-repelling, rubbing, and the like are not caused.

In particular, when the amount of the coated release agent is controlled within a range from 0.7 to 1.5 g/m², an appropriate pinhole is formed on the surface on which the release agent is coated, and so a label having the most favorable balance between the peeling properties and the ink-absorbability can be obtained. Moreover, in the method in which printing is performed after a label is stuck on a material to be stuck, labels which scarcely cause ink-repellency, blurring, and the like can be obtained, even when printing is performed using a particular printer in which a head nozzle thereof is separated from the printing surface by a few centimeters so as to perform printing on various materials to be stuck having various size and thickness.

In order to form the release agent layer on the surface of the substrate, a method in which a coating solution of the release agent is applied on the surface of the substrate can be used.

Although the coating solution of the release agent may be a solvent-based solution, emulsion-based solution, or solventless solution and is not particularly limited, the emulsion-based solution is preferably used. Since the solvent-based release agent exhibits an extremely rapid infiltration rate, when the agent is applied on a high-quality paper, for example, the agent infiltrates into the opposing surface of the paper, as a result of which both surfaces of the paper exhibit peeling properties and may not exhibit sufficient adhesion properties between the adhesive and the substrate. When the emulsion-based release agent coating solution is used, it is preferable that the concentration of the release agent coating solution be within a range from 1 to 40% and the viscosity thereof at 25°C be approximately within a range from 5 to 500 mPas in consideration of the infiltration of the release agent into the ink-jet recording sheet, uniformity of the coated surface, and ease of control of the amount of coating.

To the coating solution of the release agent, various auxiliary agents such as dyes, pigments, moistening agents, antifoaming agents, foam inhibitors, dispersants, antistatic agents, leveling agents, lubricants, thickeners, antioxidants, ultraviolet absorbers, or the like, may be arbitrarily added as needed, unless desired effects are deteriorated.

The method for applying the coating solution of the release agent is not particularly limited, and conventional applicators such as a spray, Mayer bar coater, kiss roll coater, lip coater, direct roll coater, offset roll coater, gravure roll coater, reverse roll coater, air knife coater, and the like may be arbitrarily used, for example. The amount of coating may be controlled so that the dry mass is within a range described above.

In the following, the adhesive layer provided on the rear surface (the surface opposite to the release agent layer) of the ink-jet recording sheet will be explained. In the present invention, the adhesive layer is formed by an adhesive containing fine spheres.

An adhesive which is a base is not particularly limited, and any adhesives conventionally used for adhesive labels can be used. Among these adhesives, an acrylic acid ester-based adhesive containing polyacrylic acid as the main component thereof is preferably used, because the adhesive has various types of performance which are available as needed and exhibits a good compatibility with fine spheres composed of an elastomer copolymer mainly containing an acrylic acid ester described below. The type of the acrylic acid ester-based adhesive may be a strongly caking type, a commodity type, a repeelable type, or the like, and is not particularly limited.

Although the adhesive may be a one-component type or a curing type of two or more-components, the one-component type is preferable. That is because the curing type of two or more-components is extremely soft and rich in flowability until the adhesive is cured after coating, and so the adhesive is infiltrated into the surface of the ink-jet recording sheet, as a result of which multidelamination or deterioration of the suitability for ink-jet recording may be easily caused, even if the release agent layer is formed.

The fine spheres are preferably elastic fine spheres composed of elastic bodies.

As such elastic fine spheres, anything may be used provided that it is composed of an elastomer, and polybutadiene-based, styrene-butadiene-based, polyisoprene-based elastomers, elastomer copolymers mainly containing acrylic acid ester or the like can be used, and cross-linked materials may also be used as needed. Among these, the fine spheres composed of the elastomer copolymer mainly containing acrylic acid ester are preferably used.

The elastomer copolymer mainly containing acrylic acid ester may be a copolymer of at least one acrylic acid ester and a monomer having a carboxyl group or an ionic monomer, and may further contain a component originated from a monomer that is copolymerizable with these.

As the fine spheres, any type such as one having or not having adhesion properties in itself, one containing or not containing a binder component, or the like may be used.

When the content of the component originated from the monomer having a carboxyl group or the ionic monomer is no less than the determined content, the fine spheres become adhesive, while when the content is less than the determined content, the fine spheres become non-adhesive.

Examples of acrylic acid ester include n-butyl acrylate, i-butyl acrylate, n-hexyl acrylate, 2-ethylhexyl acrylate, n-octyl acrylate, i-octyl acrylate, n-nonyl acrylate, i-nonyl acrylate, n-decyl acrylate, and the like. Examples of the monomer having a carboxyl group include acrylic acid, methacrylic acid, itaconic acid, maleic acid, fumaric acid, crotonic acid, citraconic acid, and the like.

Examples of the monomer copolymerizable with these include alkyl acrylates having a C1 to C3 alkyl group, alkyl methacrylates such as methyl methacrylate, ethyl methacrylate, n-butyl methacrylate, i-butyl methacrylate, and the like, maleates such as dimethyl maleate, di n-butyl maleate, and the like, fumarates such as dimethyl fumarate, di n-butyl fumarate, and the like, amides containing an unsaturated group such as acrylamide, methacrylamide, and the like, monomers having an amino group, a hydroxyl group, an epoxy group, a mercapto group, and/or a radical-polymerizable unsaturated bond, and the like.

It is preferable that the glass transition temperature of the elastomer copolymer mainly containing acrylic acid ester be no more than -10°C.

It is preferable that the number-average particle diameter of the fine spheres be controlled within a range from 20 to 50 µm. When the average particle diameter is less than 20 µm, only a few of the fine spheres protrude out of the surface of the adhesive, and fine spheres are flattened when a tape-like ink-jet recording adhesive label is stored for a long time, as a result of which multidelamination, defect in operating a printer, and deterioration of the suitability for ink-jet recording are caused.

Although as a countermeasure against these it is proposed to softly roll the tape-like label, this causes a defective appearance of the rolled tape, such as gapping, deformation, or the like, and is not preferable. Also, although it is proposed to decease the amount of coated adhesive in order to increase the protrusion of the fine spheres, the basic adhesion properties become deteriorated, and is also not preferable.

On the other hand, when the average particle diameter exceeds 50 µm, the basic adhesion properties become deteriorated, and so label floating or the like is caused.

Also, in terms of operation, fine spheres having a large particle diameter are caught by a clearance when coating is performed using a gap clearance system, and so a streak phenomenon is easily caused and it is difficult to decrease the coating amount.

Although the increase of the coating amount of the adhesive changes the label floating for the better, it causes various problems such as multidelamination over time, deterioration of specular oozing, defect in operating a printer, deterioration of the suitability for ink-jet recording, and the like, and so is not preferable, and also is disadvantageous in terms of the cost.

It is preferable that the solid content of the fine spheres contained in the adhesive be 10 to 90% by mass, and more preferably 20 to 80% by mass, of the adhesive containing fine spheres. In this manner, by setting the solid content of the fine spheres within a range from 10 to 90% by mass of the adhesive containing fine spheres, the linerless ink-jet recording adhesive label can exhibit both a stable light unwinding force and suitability for a curved surface that is a base of the adhesion properties. That is, when the content of the fine spheres is no less than 10% by mass, there is no concern about a defect in operating a printer caused by increasing the unwinding force over time, deterioration of the suitability for ink-jet recording, and paper-tear occurring at worst. On the other hand, when the content is no more than 90% by mass, a good suitability for a curved surface can be maintained.

In the present invention, the amount of the adhesive containing the fine spheres is preferably 5 to 50 g/m², and more preferably 10 to 30 g/m², in dry weight. When the amount of the adhesive containing fine spheres is no less than 5 g/m², the adhesion properties can be sufficiently exhibited when used as a label. On the other hand, when the amount is no more than 50 g/m², there is no risk of causing problems such as multidelamination generated by a lack of protrusion of the fine spheres.

In order to form the adhesive layer, the adhesive containing the fine spheres is coated onto the rear surface of the substrate. Although the adhesive used for coating may be either a solvent-based type or an emulsion type, the emulsion type adhesive is preferable, because the solvent-based type in which a solvent easily infiltrates into the ink-jet recording sheet may cause contamination of the ink-jet recording surface and deterioration of the suitability for ink-jet recording.

Even in the case of the emulsion type, when coating is performed using various applicators, it is preferable that the viscosity be set as high as possible, so as to prevent the infiltration. It is preferable that the emulsion type has a viscosity of approximately 100 to 15,000 mPas (25°C) and a concentration of 20 to 80% in solid content, in order to control the amount of coating.

Coating of the adhesive containing the fine spheres is performed using various applicators such as a Mayer bar coater, kiss roll coater, lip coater, direct roll coater, offset roll coater, gravure roll coater, reverse roll coater, rod coater, blade coater, comma direct coater, comma reverse coater, air knife coater, slit die coater, and the like. Drying can be performed in accordance with a conventional method combined with the use of the above-mentioned applicators.

It is preferable that the adhesive containing the fine spheres be applied directly to the rear surface of the ink-jet recording sheet used as the substrate so as to exhibit sufficient adhesion properties to the substrate and to make the fine spheres sufficiently protrude out of the surface of the adhesive.

### Examples

Although the present invention will be more specifically explained by using Examples described below, the scope of the present invention is not limited by these examples. It should be understood that in the Examples, unless specifically stated otherwise, "%" and "parts" mean "% by mass" and "parts by mass".

### Example 1 "Formation of Release Agent Layer"

An ink-jet recording sheet having a release agent layer was produced by using a high-quality paper (OTP 81.4 g/m², manufactured by Oji Paper Co., Ltd.) as a substrate, and forming a release agent layer on one surface of the substrate by coating and hot-air drying polyvinyl alcohol containing a long-chain alkyl group (K-256, manufactured by CHUKYO YUSHI CO., LTD., the carbon-number of the long-chain alkyl group: 18) as a release agent using a gravure coater so that the amount of coating was 1.0 g/m².

### "Preparation of Adhesive Label"

A linerless ink-jet recording adhesive label was prepared by forming an adhesive layer on the rear surface of the ink-jet recording sheet having the above-formed release agent layer by mixing an acrylic emulsion adhesive (SVP-621TZ, manufactured by Saiden Chemical Industory) with fine spheres composed of an elastomer copolymer mainly containing acrylic acid ester (KPS-2004-3, the number-average particle diameter was 21 microns, manufactured by ARAKAWA CHEMICAL INDUSTRIES, LTD.) in a mass ratio of 50/50 equivalent to the solid content thereof and stirring the mixture, followed by coating and drying the mixture using a reverse roll coater so that the amount of coating was 15 g/m² in dry weight.

### Example 2

A linerless ink-jet recording adhesive label was prepared in a similar manner to that of Example 1, except that the amount of coating of the release agent was 4.0 g/m² in "Formation of Release Agent Layer".

### Example 3

A linerless ink-jet recording adhesive label was prepared in a similar manner to that of Example 1, except that a release agent layer was formed onto the ink-jet recording surface using an ink-jet recording sheet with a coating layer (NIJ-115-1G, manufactured by Oji Paper Co., Ltd.) instead of the high-quality paper in "Formation of Release Agent Layer".

### Example 4

A linerless ink-jet recording adhesive label was prepared in a similar manner to that of Example 1, except that a release agent layer was formed onto the ink-jet recording surface using a foam sheet (OKHJ 64 g/m², manufactured by Oji Paper Co., Ltd.) used instead of the high-quality paper in "Formation of Release Agent Layer".

### Example 5 "Formation of Release Agent Layer"

An ink-jet recording sheet having a release agent layer was produced in a similar manner to that of Example 1, except that polyvinyl alcohol containing a long-chain alkyl group (Pyroyl 406, manufactured by Ipposha Oil Industries Co., Ltd.) was used as a release agent in the same coating amount in "Formation of Release Agent Layer".

### "Preparation of Adhesive Label"

A linerless ink-jet recording adhesive label was prepared by forming an adhesive layer on the rear surface of the ink-jet recording sheet having the above-formed release agent layer by mixing an acrylic emulsion adhesive (L-301, manufactured by NIPPON CARBIDE INDUSTRIES CO., INC.) with fine spheres composed of an elastomer copolymer mainly containing acrylic acid ester (B-7772, the number-average particle diameter was 45 microns, manufactured by NIPPON CARBIDE INDUSTRIES CO., INC.) in a mass ratio of 50/50 equivalent to the solid content thereof and stirring the mixture, followed by coating and drying the mixture using a reverse roll coater so that the amount of coating was 15 g/m² in dry weight.

### Example 6 "Formation of Release Agent Layer"

An ink-jet recording sheet having a release agent layer was produced in a similar manner to that of Example 1, except that polyvinyl alcohol containing a long-chain alkyl group (M-479, manufactured by CHUKYO YUSHI CO., LTD., the carbon-number of the long-chain alkyl group: 18) was used in the same coating amount in "Formation of Release Agent Layer".

### "Preparation of Adhesive Label"

A linerless ink-jet recording adhesive label was prepared in a similar manner to that of Example 1, except that an adhesive layer was formed on the rear surface of the ink-jet recording sheet having the above-formed release agent layer by mixing the acrylic emulsion adhesive (L-301, manufactured by NIPPON CARBIDE INDUSTRIES CO., INC.) with the fine spheres (B-7772, the number-average particle diameter was 45 microns, manufactured by NIPPON CARBIDE INDUSTRIES CO., INC.) in a mass ratio of 75/25 equivalent to the solid content thereof and stirring the mixture, followed by coating and drying the mixture using a reverse roll coater so that the amount of coating was 15 g/m² in dry weight.

### Example 7

A linerless ink-jet recording adhesive label was prepared in a similar manner to that of Example 1, except that the acrylic emulsion adhesive (L-301, manufactured by NIPPON CARBIDE INDUSTRIES CO., INC.) was mixed and stirred with the fine spheres (B-7772, the number-average particle diameter was 45 microns, manufactured by NIPPON CARBIDE INDUSTRIES CO., INC.) in a mass ratio of 25/75 equivalent to the solid content thereof in "Preparation of Adhesive Label".

### Example 8

A linerless ink-jet recording adhesive label was prepared in a similar manner to that of Example 1, except that the acrylic emulsion adhesive (L-301, manufactured by NIPPON CARBIDE INDUSTRIES CO., INC.) was mixed and stirred with fine spheres composed of an elastomer copolymer mainly containing acrylic acid ester (B-7747, the number-average particle diameter was 33 microns, manufactured by NIPPON CARBIDE INDUSTRIES CO., INC.) in a mass ratio of 75/25 equivalent to the solid content thereof in "Preparation of Adhesive Label".

### Example 9

A linerless ink-jet recording adhesive label was prepared in a similar manner to that of Example 1, except that the acrylic emulsion adhesive (L-301, manufactured by NIPPON CARBIDE INDUSTRIES CO., INC.) was mixed and stirred with the fine spheres (B-7772, the number-average particle diameter was 45 microns, manufactured by NIPPON CARBIDE INDUSTRIES CO., INC.) in a mass ratio of 10/90 equivalent to the solid content thereof and the amount of coating was 20 g/m² in dry weight in "Preparation of Adhesive Label".

### Example 10

A linerless ink-jet recording adhesive label was prepared in a similar manner to that of Example 1, except that an acrylic emulsion adhesive (TS-662L, manufactured by NIPPON CARBIDE INDUSTRIES CO., INC.) was mixed and stirred with the fine spheres (B-7772, the number-average particle diameter was 45 microns, manufactured by NIPPON CARBIDE INDUSTRIES CO., INC.) in a mass ratio of 80/20 equivalent to the solid content thereof and the amount of coating was 20 g/m² in dry weight in "Preparation of Adhesive Label".

### Example 11

A linerless ink-jet recording adhesive label was prepared in a similar manner to that of Example 1, except that an acrylic emulsion adhesive (SVP-621TZ, manufactured by Saiden Chemical Industory) was mixed and stirred with the fine spheres (KPS-2004-3, the number-average particle diameter was 21 microns, manufactured by ARAKAWA CHEMICAL INDUSTRIES, LTD.) in a mass ratio of 90/10 equivalent to the solid content thereof in "Preparation of Adhesive Label".

### Comparative Example 1

A linerless ink-jet recording adhesive label was prepared in a similar manner to that of Example 1, except that a high-quality paper (OTP 64 g/m², manufactured by Oji Paper Co., Ltd.) was used as a substrate and on one surface of which a release agent layer was formed by coating and hot-air drying a silicone resin (a mixture in which 1 part by mass of SRX-212 containing a platinum catalyst was mixed with 100 parts by mass of SD7220, manufactured by Dow Coming Toray Silicone Co. Ltd.) as a release agent using a gravure coater so that the amount of coating was 1.5 g/m² in "Formation of Release Agent Layer".

### Comparative Example 2

A linerless ink-jet recording adhesive label was prepared in a similar manner to that of Example 1, except that a high-quality paper (OTP 81.4 g/m², manufactured by Oji Paper Co., Ltd.) was used as a substrate and on one surface of which a release agent layer was formed by coating and hot-air drying a silicone resin (a mixture in which 5 parts by mass of CAT-PM-10A containing a platinum catalyst was mixed with 100 parts by mass of X-52-195, manufactured by Shin-Etsu Chemical Co., Ltd.) as a release agent using a gravure coater so that the amount of coating was 1.0 g/m² in "Formation of Release Agent Layer".

### Comparative Example 3

A linerless ink-jet recording adhesive label was prepared in a similar manner to that of Example 1, except that an adhesive layer was formed without using fine spheres by coating and drying an acrylic emulsion adhesive (SVP-621TZ, manufactured by Saiden Chemical Industory) as an adhesive using a reverse roll coater so that the amount of coating was 12 g/m² in dry weight in "Preparation of Adhesive Label".

### Comparative Example 4

A linerless ink-jet recording adhesive label was prepared in a similar manner to that of Example 1, except that an adhesive layer was formed without using fine spheres by coating and drying an acrylic emulsion adhesive (TS-662L, manufactured by NIPPON CARBIDE INDUSTRIES CO., INC.) as an adhesive using a reverse roll coater so that the amount of coating was 12 g/m² in dry weight in "Preparation of Adhesive Label".

### Comparative Example 5

A linerless ink-jet recording adhesive label was prepared in a similar manner to that of Example 1, except that an adhesive layer was formed without using fine spheres by coating and drying an acrylic emulsion adhesive (TS-662L, manufactured by NIPPON CARBIDE INDUSTRIES CO., INC.) as an adhesive using a reverse roll coater so that the amount of coating was 22 g/m² in dry weight in "Preparation of Adhesive Label".

Sixteen kinds of the linerless ink-jet recording adhesive labels obtained as described above were evaluated with respect to the following items. Results thereof are shown in Table 1. The method for evaluating with respect to each item is described below.

### (Unwinding Force)

In accordance with JIS Z 0237, the unwinding force of the respective linerless ink-jet recording adhesive label was measured at a peel rate of 5 m/min or 20 m/min after the treatment in an environment at 23°C and 50% RH (relative humidity) for 7 days or at 40°C and 50% RH for 1 month, and evaluated in accordance with the following criteria.
Ⓞ: The peel force was no more than 20 N/m and peeling was performed with little resistance.
○: The peel force was over 20 N/m and no more than 30 N/m, and peeling was performed well.
△: The peel force was over 30 N/m and no more than 50 N/m, and peeling was performed with a slight resistance but there was no practical problem.
×: The peel force was over 50 N/m and peeling was performed with a severe resistance or the adhesive label was torn.

### (Adhesion Force)

In accordance with JIS Z 0237, the adhesion force of the respective linerless ink-jet recording adhesive label to polyethylene or high-quality paper was measured at a peel rate of 0.3 m/min in an environment at 23°C and 50% RH.

### [Suitability for curved surface]

After the respective linerless ink-jet recording adhesive label was treated in an environment at 23°C and 50% RH for 7 days (1) or at 40°C and 50% RH for 1 month (2), the label with a width of 15 mm and a length of 20 mm was wound around a 50 mmΦ pipe (made from polyethylene), left in an environment at 23°C and 50% RH for 1 day, and measured with respect to the unstuck length of both end portions thereof to evaluate in accordance with the following criteria.
- Ⓞ:: The unstuck length of both end portions was no more than 2 mm.
- ○:: The unstuck length of both end portions was no more than 4 mm.
- △: The unstuck length of both end portions was no more than 6 mm.
- ×: The unstuck length of both end portions was more than 6 mm.

### [Ink-absorbability (repellent property)]

The respective linerless ink-jet recording adhesive label was subjected to printing using an ink-jet printer (PM-670C, manufactured by SEIKO EPSON CORPORATION), and the state of the printed portion was evaluated with respect to the ink-droplet repellency in accordance with the following criteria.
Ⓞ: Repelled ink-droplets were not recognized.
○: Although repelled ink-droplets were slightly recognized in printed thin lines, there was no practical problem.
△: Although repelled ink-droplets were partially recognized in printed letters, the letters could be sufficiently read and there was no practical problem.
×: Repelled ink-droplets were significantly recognized, and the external appearance of the letters was poor.

### [Ink-drying Property]

The respective linerless ink-jet recording adhesive label was subjected to printing using an ink-jet printer (PM-670C, manufactured by SEIKO EPSON CORPORATION), and the printed portion was immediately rubbed with fingers to evaluate the drying property in accordance with the following criteria.
○: The printed portion was completely dried.
△: Although the printed portion was slightly undried immediately after printing, it was completely dried after a few seconds, and there was no practical problem.
×: The printed portion was almost undried.

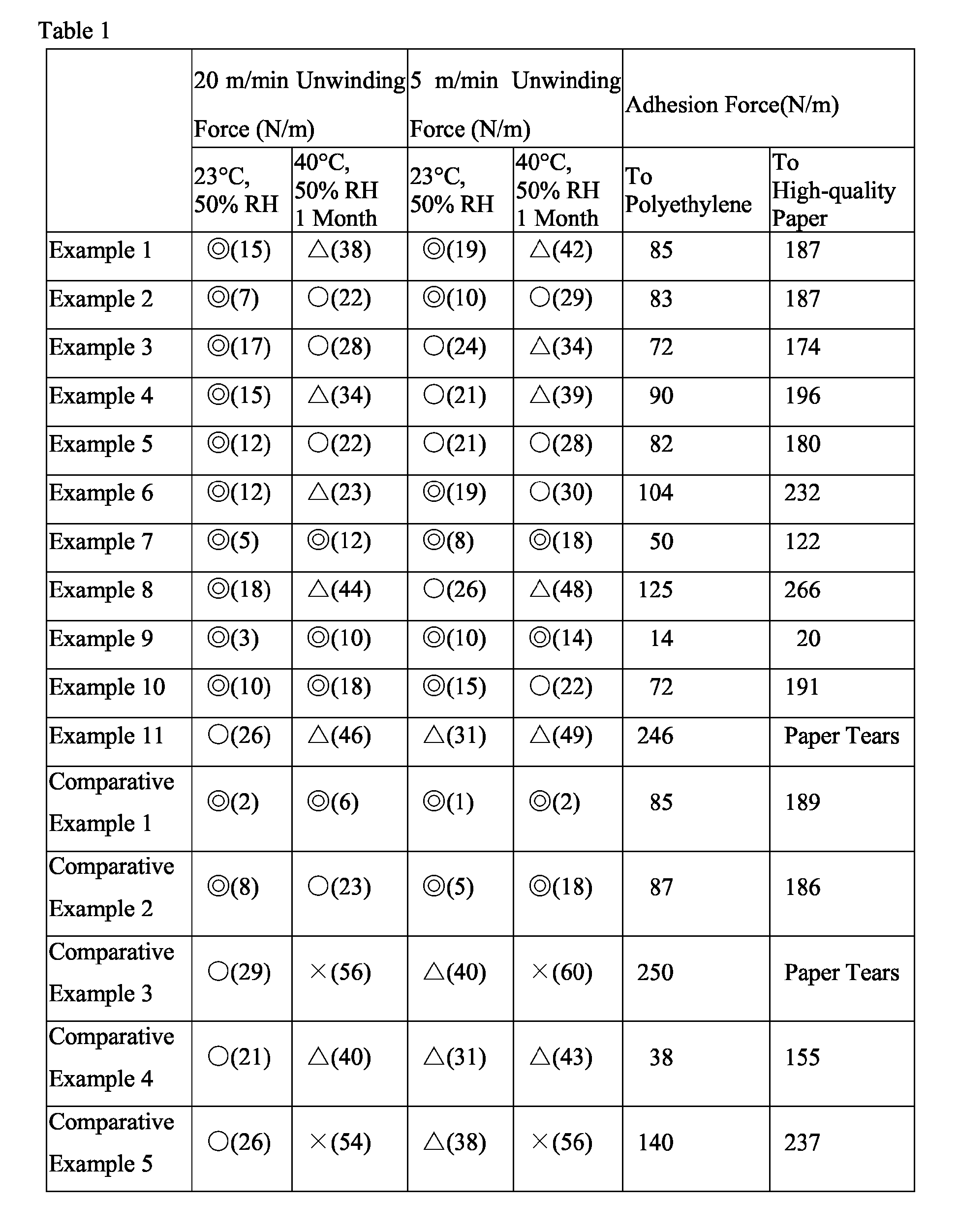

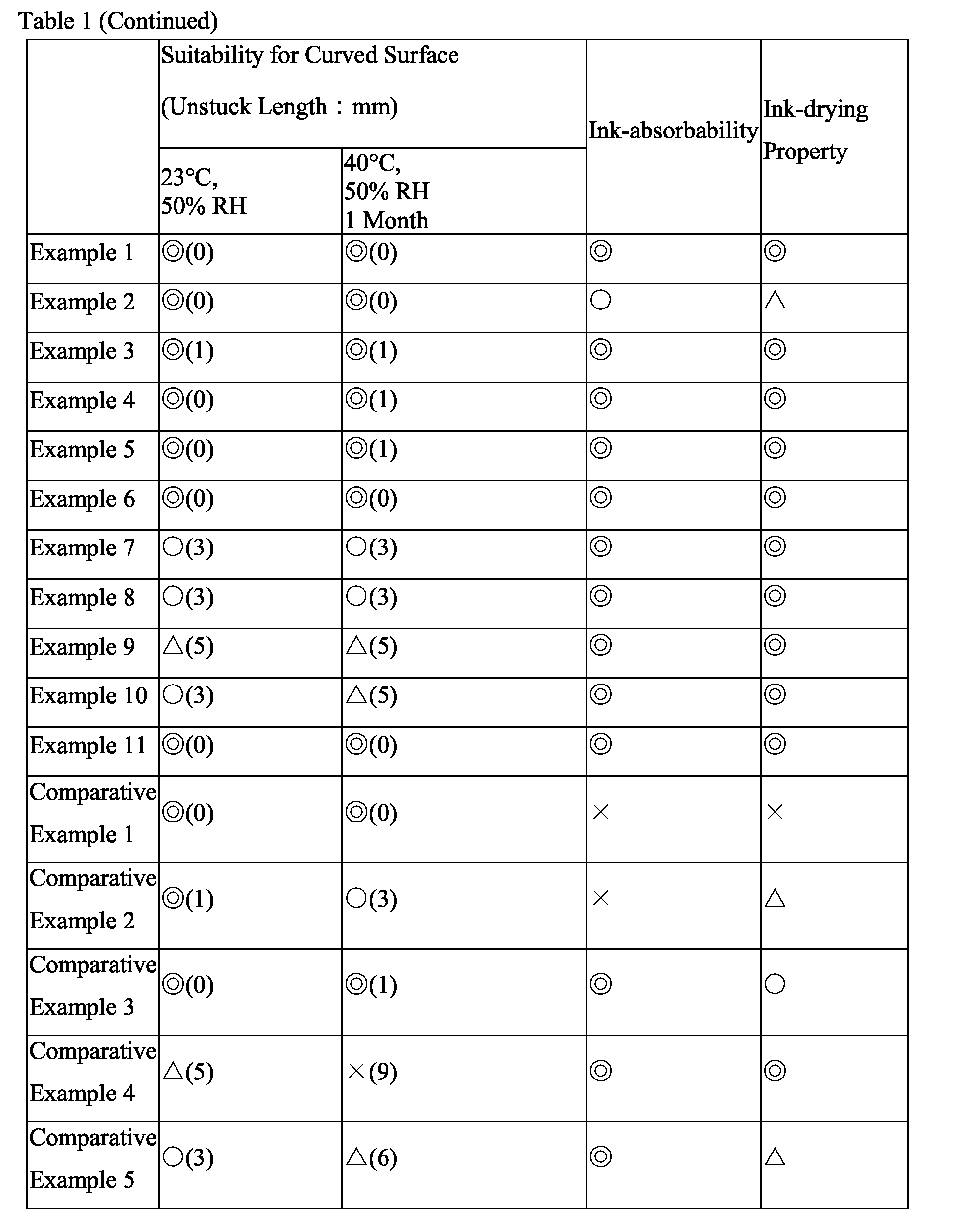

As is apparent from Table 1, Comparative Examples 1 and 2 in which the respective silicone resins were used as the release agent thereof resulted in a lack of both the ink-absorbability and ink-drying property.

Comparative Examples 3 to 5 are examples in which the respective adhesive layer was formed using only the adhesive without using fine particles in preparation of the respective adhesive label. It is apparent that in Comparative Example 3 in which the adhesive having a relatively strong adhesion force was used, the unwinding force after the treatment performed in an environment at 40°C and 50% RH for 1 month was excessively strong. It is apparent that Comparative Example 4 in which the adhesive having a relatively weak adhesion force was used resulted in a defective suitability for a curved surface after being left for 1 month. It is apparent that in Comparative Example 5 in which the amount of the adhesive was increased in order to improve the suitability for a curved surface, the suitability for a curved surface after being left for 1 month was improved, but the unwinding force (20 m/min) after the treatment performed in an environment at 40°C and 50% RH for 1 month was deteriorated. That is, it is apparent that it was difficult for the labels to exhibit both the adhesion properties and the peeling properties when unwound by using only a polyvinyl alcohol containing a long-chain alkyl group as a release agent.

In contrast, it is apparent that the linerless adhesive labels according to the present invention had both the adhesion properties and peeling properties free from practical problems. In Table 1, the linerless adhesive label of Example 9 exhibited a low value of the adhesion force in itself. However, the suitability for a curved surface of this adhesive label was free from practical problems, probably because this adhesive label used the mixture of the adhesive and the fine spheres for the adhesive layer and the fine spheres could create a sufficient adhesive-contact area by elastic deformation when stuck to the curved surface or the like.

Although the adhesives of Example 11 and Comparative Example 3 caused the paper to tear in the measurement of the adhesion force to the high-quality paper, there seemed to be no practical problems because the paper-tear itself occurred when peeling off a label after the end of use of the label.

### Industrial Applicability

The adhesive label of the present invention does not require a release paper and is used for intended purposes suitable for ink-jet printing.

According to the present invention, a linerless ink-jet recording adhesive label can be provided which does not require a release paper, has suitability for ink-jet recording, does not cause an increase of the peel force even over time, and is excellent in the adhesion and peeling properties.

## Claims

1. A linerless ink-jet recording adhesive label comprising an ink-jet recording sheet as a substrate, a release agent layer provided on the front surface of the substrate, and an adhesive layer provided on the rear surface of the substrate, **characterized in that** a release agent composing the release agent layer mainly comprises at least one polymer selected from the group consisting of a polyvinyl alcohol containing a long-chain alkyl group, an amino-alkyd resin containing a long-chain alkyl group, and a polyethylenimine containing a long-chain alkyl group, and the adhesive layer is formed by an adhesive containing fine spheres.

2. A linerless ink-jet recording adhesive label according to claim 1, **characterized in that** a solid content of the fine spheres is 20 to 80 % by mass of the adhesive containing fine spheres.

3. A sticking and printing method **characterized in that** the linerless ink-jet recording adhesive label of claim 1 or 2 is formed into a wound body in a roll shape by adhering the adhesive layer to the release agent layer present at the rear of the adhesive layer, the wound body is conveyed while being rewound by using a conveyer and is stuck on a material to be stuck, and printing is performed on the surface of the release agent layer using an ink-jet ink.
